# EUROPEAN PATENT SPECIFICATION

(11) **EP 4 155 648 B1**
(45) Date of publication and mention of the grant of the patent: **09.10.2024**
(21) Application number: 22207978.2
(22) Date of filing: 13.09.2019
(51) Int. Cl.: F28D 9/00, B01D 1/22, C02F 1/20, F28F 3/04, F28D 21/00, C02F 1/10, C02F 103/08, C02F 1/16

(54) **PLATE HEAT EXCHANGER FOR TREATMENT OF A LIQUID FEED**
PLATTENWÄRMETAUSCHER ZUR BEHANDLUNG EINER FLÜSSIGKEITSZUFUHR
ECHANGEUR DE CHALEUR À PLAQUES POUR LE TRAITEMENT D'UNE CHARGE LIQUIDE

(43) Date of publication of application: 29.03.2023
(62) Divisional of application: 19197270.2
(73) Proprietor: Alfa Laval Corporate AB, 221 00 Lund (SE)
(72) Inventor: BLOMGREN, Fredrik, SE-239 41 FALSTERBO (SE)
(74) Representative: Alfa Laval Attorneys

(56) References cited:
- WO-A2-2009/080564
- CN-U- 203 820 488
- KR-B1- 101 146 105
- US-A1- 2017 176 047

## Description

The present invention relates to a plate heat exchanger for treatment of a liquid feed, a heat exchanging plate for a plate heat exchanger for treatment of a liquid feed, and a method of manufacturing a plate heat exchanger for treatment of a liquid feed.

### Background of the invention

Equipment for desalination of seawater, where one or several plate packages of heat exchanger plates form the main components in the process, has been manufactured since many years. The applicant company has since several years produced a fresh water generator where the evaporation, separation and condensation take place in the plate package. The details may be found in the international application WO 2006 / 104443 A1 assigned to Alfa Laval Corporate AB. It is disclosing a plate heat exchanger for desalination having first- and second type plate interspaces formed in alternating order in the heat exchanger. The first type plate interspaces form evaporation sections, separation sections and condensation sections, whereas the second type plate interspaces form heating sections, separation sections and cooling sections.

The evaporation section is used for evaporating a liquid feed, such as sea water, the separation section is used for separating evaporated feed from non-evaporated feed and the condensation section is used for condensing the evaporated feed. The heating section is heating the evaporation section and the cooling section is cooling the condensation section. The advantage of the above-mentioned heat exchanger is that it does not need any container since the whole treatment of the seawater is performed in the plate package.

The above plate heat exchanger has centrally located ports for heating fluid, cooling fluid and fresh water and the ports for brine and feed are symmetrically arranged about a central axis of the heat exchanger plate. In this way only one plate type is needed. The first type interspaces and second type interspaces are formed by using two different gaskets and arranging the heat exchange plates face to face by turning every second plate 180 degrees about the centre axis. In this way the corrugations in the opposing plates in the evaporation sections and condensation sections will form a cross-shaped pattern in which opposing ridges in each plate interspace abut. The valleys in each plate interspace form ridges in the neighbouring plate interspaces which will abut the ridges of an opposing plate in the respective neighbouring plate interspaces.

The separation section, however, typically extends between all plate interspaces, i.e. also between the heating sections and cooling sections in the second type plate interspaces. In the separation section no heat exchange takes place between the plates. This is different from the condensation section and the evaporation section. In the separation section the plates are designed such that the main corrugated pattern of two adjacent plates will fall into each other and not abut, except on occasional contact points. In this way a meandering flow path is achieved in which the flow constantly is caused to change direction and in which way the droplets of non-evaporated feed will be trapped by impacting on the plate and then released from the evaporation section while evaporated feed can pass through to the condensation section.

Using only one plate type, the separation section has been achieved in the prior art heat exchanger by having a ridge on the left side horizontally level with a valley on the right side and vice versa. In the above-mentioned prior art heat exchanger, the central part of the heat exchanger is used for ports for heating fluid, cooling water, fresh water etc. Also, the separation section has a non-corrugated central zone between the left and right side of the separation area and designing the pattern so that a ridge on the left side is horizontally level with a valley on the right side, and vice versa, is not a problem. In the above-mentioned prior art heat exchanger, the non-corrugated central zone is partly used for the outlet port for fresh water which extend into the central part of the separation section.

The centrally located ports and the ports adjacent the edges of the heat exchanger plate implies that up to six gasket elements will be required along the width of the heat exchanger plate. The gaskets occupy space on the heat exchanger plate which cannot be used for the process. The width of the gasket will be about the same for a large heat exchanges as for a small heat exchanger. For a large heat exchanger, the space occupied by the gaskets may be negligible, however, for a small heat exchanger it may be significant.

There is an increased need for smaller fresh water generators which may be used on board smaller vessels. When reducing the size of the fresh water generator as discussed above, the gaskets will still take up essentially the same amount of space. This will make the smaller fresh water generators less area efficient compared to the large fresh water generators. This is especially problematic for the condenser which needs a large heat exchanging area to operate properly.

One solution to the above problem is to omit the centrally located ports, in particular in the condenser, and have all of the ports arranged at the edges of the heat exchanging plate. One example of such design for the condenser is presented in the European patent application EP19171723.0. The ports may then still be symmetrical placed about the centre axis to allow the individual plates to be turned over, i.e. turned 180 degrees about the centre axis, while keeping the ports at the same relative position. By keeping the ports and the gasket grooves symmetric about the centre axis, only one plate type is needed.

However, the above implies that the central parts of the heat exchanging plate will be used for heat exchange in the evaporation section and in the condensation section. Thus, it will not be efficient to have a central non-corrugated area in the separator for the change between the ridges and valleys takes place.

Further, changing between ridges and valleys along the central axis will result in an open non-corrugated channel along the central axis. Even without using a central non-corrugated area an open non-corrugated channel will be established due to the corrugations having flanks between tops and bottoms. The open channel along the straight central axis will allow a large number of droplets to pass directly to the condenser without impacting on the plate. This will affect the separation negatively.

It is therefore an object of the present invention to find a more efficient solution for the change between ridges and valleys at the central part of the heat exchanger.

Omitting the centrally located ports will also remove any central contact location between opposing plates in the separation section. This may result in a reduced structural stability in the central region of the separation section.

It is a further object of the present invention to improve the structural stability of the separation section when there are no centrally located ports.

If the corrugated pattern of the opposing plates falling into each other in the separation section extends all the way to the gasket groove, the plate interspace will also lack any contact point along the gasket groove. This will lead to a less robust gasket groove an may lead to that the gasket will be mispositioned in the gasket groove, which in turn may lead to leakage.

In the prior art, the press depth of the corrugation has been slightly increased adjacent the gasket groove in order to improve the support of the gasket in the gasket groove. However, still no contact between plates between the gasket groove and the separation section have been provided.

It is thus a yet further object of the present invention to improve the design of the gasket groove and increase the structural stability at the gasket and gasket groove at the edge of the plate.

Further prior art includes CN203820488UU disclosing a heat exchange plate which is sequentially divided from top to bottom into a condensation zone, an evaporation zone and a heating zone.

CN206262115UU describes an evaporating-separating-condensing three-in-sea water collecting plate. The gas-liquid separation zone separation structure using a flap. The flap is provided with reinforcing ribs.

GB1211065A describes a plate heat exchanger in which two plates are assembled in superimposed relation. One of the plates being turned 180° in its own plane relative to the other, and a passage is obtained between the plates.

KR101345733B1 describes a heat exchanger plate with barriers.

US8646517B2 describes a heat exchanger plate heat exchanger plate for a plate heat exchanger, which plate has a number of ports, a distribution region, a heat transfer region, a first adiabatic region, a second adiabatic region and an edge area that extends outside the ports and the regions. KR 101 146 105 B1 describes a heat exchanger plate according to the preamble of claim 1.

### Summary of the invention

The invention is defined by a heat exchanger plate according to claim 1, a method of manufacturing a plate heat exchanger according to claim 11 and use of a plate heat exchanger according to claim 12. The above objects are realised in a first aspect by a plate heat exchanger for treatment of a liquid feed, the heat exchanger comprising a plate package having a plurality of successively arranged heat exchanger plates, each heat exchanger plate defining a first vertical edge, an opposite second vertical edge extending parallel to the first vertical edge and a central vertical axis extending substantially centrally between and in parallel with the first vertical edge and the second vertical edge, each heat exchanger plate further defining an evaporation section for vaporizing the feed, a condensation section for condensing the vaporized feed, and a separation section for separating vaporized feed and non-vaporized feed, the separation section being located between the evaporation section and the condensation section along the direction of the central vertical axis and forms alternating ridges and valleys, the separation section defines:
a central part extending on both sides of the central vertical axis, the ridges and valleys in the central part extending at an oblique angle relative to the central vertical axis,
a first part extending between the first vertical edge and the central part, the ridges and valleys in the first part extending horizontally and connect with respective ridges and valleys in the central part, and
a second part extending between the second vertical edge and the central part, the ridges and valleys in the second part extending horizontally and connect with respective ridges and valleys in the central part, the ridges in the first part being horizontally level with the valleys in the second part and vice versa,
whereby adjacent heat exchanging plates are arranged such that ridges fall into valleys of opposing plates in the first and second parts and opposing ridges of opposing plates contact each other in the central part.

The evaporation section is located in the lower part of the plate package, the condensation section is located in the upper part of the plate package and the separation section is located in between the evaporation section and the condensation section. The heat exchanging plates at the evaporation section and condensation section are corrugated with a corrugation of ridges and valleys. Using a single plate type for the complete plate package, every second plate is turned 180 degrees about the centre axis when forming the plate package. In other words, front surfaces of each plate face front surfaces of adjacent plates and rear surfaces of each plate face rear surfaces of adjacent plates. Thereby, alternating first type and second type plate interspaces are formed. The evaporation section and the condensation section may be located in the same type interspace; however, they may also be located in different type interspaces, i.e. in neighbouring plate interspaces. In this way the evaporation section and the condensation section are formed on opposite sides of the plate.

The corrugations in the evaporation section and condensation section should be made such that when every second plate is turned about the centre axis, a cross corrugated pattern is formed in the plate interspaces in which opposing ridges contact each other at contact points. The cross-corrugated pattern improves the heat transfer between the plate interspaces at the evaporation section and condensation section.

In the separation section, no heat exchange between the plate interspaces takes place. Instead, in the first and second parts of the separation section, constituting the major part or the separation section, the heat exchanging plates are corrugated with a corrugation of ridges and valleys in such a way they permit catching of a liquid, i.e. liquid droplets, flowing from the evaporation section to the condensation section. In order to do that the ridges and valleys should extend in the transversal direction of the plate, i.e. transversally with respect to the vertical edges and the central axis. Further, the ridges of each plate should fall into valleys of opposing plates, and conversely, the valleys of each plate should receive ridges of opposing plates, without thereby contacting the opposite plate. Thereby a meandering flow path is established in the plate interspaces between the plates of the plate package in the first- and second parts of the separation section. In other words, a ridge thus is facing a valley of the opposing plate, and vice versa. No contact is thereby established between the plates in the first- and second parts.

In order for a ridge to be able to fall into an opposing valley when every second plate is turned by 180 degrees, a ridge between the first edge and the central axis must in the horizontal (transversal) direction correspond to a valley between the central axis and the second edge. This corresponds to a vertical shift between the respective ridges and valleys in the first part relative to the second part by half the distance between the centre of adjacent ridges. In this way, when every second plate is turned by 180 degrees, ridges will face valleys and vice versa, in the first- and second parts.

There will thus be a transition at the central axis, where ridges and valleys meet. When using centrally located ports, the transition will be made at the port, however, when omitting the centrally located ports, another solution must be found. Preferably, the central part extending symmetrically on both sides of the central axis between the first part and the second part in order to minimize the central part and to have the contact points along the centre axis. The central part thus forms the transition between the first part and the second part in the transversal direction.

In order to increase the structural stability of the separation section, the opposing plates at the central part form a cross-corrugated pattern, i.e. the ridges and valleys in the central part extending at an oblique angle relative to the central vertical axis such that opposing ridges contact at contact points. The valleys in each plate interspace will contact the respective neighbouring plate in the neighbouring plate interspace, as a valley will form a ridge on the opposite side of the plate. In this way, the plates in the separation section which do not contact in the first- and second parts have additional support at the central axis.

According to a further embodiment of the first aspect, the separation section of each heat exchanger plate defines a first edge part between the first vertical edge and the first part and a second edge part between the second vertical edge and the second part, the ridges and valleys in the first and second edge parts extend at an oblique angle relative to the central vertical axis such that opposing ridges of opposing plates contact each other in the first and second edge parts.

In order to further increase the structural stability of the separation section at the first- and second edges, the plates may form a cross-corrugated pattern adjacent the edges, i.e. the ridges and valleys in the edge parts extending at an oblique angle relative to the vertical edges such that opposing ridges contact at contact points and valleys contact in the neighbouring plate interspaces. In this way, the plates in the separation section which do not contact in the first and second parts have additional support at the edges. This improves the structural stability at the gasket and gasket groove at the edge of the plate.

According to a further embodiment of the first aspect, the plate package defining first plate interspaces and second plate interspaces arranged in alternating order, each plate interspace being enclosed by a gasket extending along the first and second vertical edges of each plate.

Alternating first- and second plate interspaces are preferably realized by using a single plate and turning every second plate by 180 degrees about the central axis such that plate front surfaces face each other and plate rear surfaces face each other in the plate package. The plates in the package are mutually sealed by gaskets, preferably made by rubber.

According to a further embodiment of the first aspect, the separation section is provided in both the first and second plate interspaces.

As no heat transfer is taking place in the separation section, both the first- and second plate interspaces may be used for separation.

According to a further embodiment of the first aspect, the heat exchanging plate is provided with apertures at the first and second passages for communication between the plate interspaces.

Apertures should be provided between the plate interspaced for allowing the vaporized feed to flow between the plate interspaces. Preferably, both the lower part and the upper part of the separation section of each plate is provided with one or more apertures each.

According to a further embodiment of the first aspect, the ridges and valleys in the first and second parts define a first press depth, whereas the ridges and valleys in the central part and/or in the first and second edge parts define a second press depth, the first press depth being larger than the second press depth.

The press depth of the plate is defined as the distance between an imaginary central plane of each plate and the tops of the ridges and bottom of the valleys, respectively. The removal of liquids in the separation section may be improved by increasing the press depth of the ridges and valleys in the separation section compared to the ridges and valleys in the evaporation section and condensation section. In this way the flow path from the evaporation section to the condensation section will be increased and there will be an increased change of direction of the flow path when passing the deeper corrugations which will cause more droplets to impact the plate and be separated from the vapor flow. The press depth in the central part and/or in the first and second edge parts should be the same as in the evaporation section and condensation section as the opposing ridges contact at contact points and if some ridges and valleys would define a larger press depth, they would be over compressed at the contact points.

The press depth can be increased in the first and second parts of the separation section as the ridges fall into the valleys. There are also no contact points in the first and second parts of the separation section. Using the larger press depth in the first and second parts of the separation section requires a height adjustment of the press depth in the central part and/or in the first and second edge parts such that the press depth corresponds to the press depth of the evaporation second and condensation section.

According to a further embodiment of the first aspect, the liquid feed is sea water.

Using sea water as the liquid feed, the condensate output will be fresh water having a lower salinity than the feed and the concentrate output will be brine having a higher salinity than the feed.

According to a further embodiment of the first aspect, the width of the central part is smaller than the width of each of the first and second parts.

The central part defines a cross corrugated patent it is not used for separating liquid and vapour and only improves the structural stability of the plate package. Therefore, it should be as small as possible.

According to a further embodiment of the first aspect, the central part defines an area less than 20% of the area of each of the first and second parts, preferably less than 10%, more preferably less than 5%.

The above values allow for good structural stability of the plate package while maintaining most of the effective separation area.

According to a further embodiment of the first aspect, the width of the central part is substantially equal to the distance between the centre of adjacent ridges in the first and second parts.

In this way, the ridges and valleys can form a 45-degree angle relative to the central axis. In this way, opposing plates form contact points at the central axis.

The above objects are realised in a second aspect by a heat exchanger plate for a plate heat exchanger for treatment of a liquid feed, heat exchanger plate defining each heat exchanger plate defining a first vertical edge, an opposite second vertical edge extending parallel to the first vertical edge and a central vertical axis extending substantially centrally between and in parallel with the first vertical edge and the second vertical edge, each heat exchanger plate further defining an evaporation section for vaporizing the feed, a condensation section for condensing the vaporized feed, and a separation section for separating vaporized feed and non-vaporized feed, the separation section being located between the evaporation section and the condensation section along the direction of the central vertical axis and forms alternating ridges and valleys, the separation section defines:
a central part extending on both sides of the central vertical axis, the ridges and valleys in the central part extending at an oblique angle relative to the central vertical axis,
a first part extending between the first vertical edge and the central part, the ridges and valleys in the first part extending horizontally and connect with respective ridges and valleys in the central part, and
a second part extending between the second vertical edge and the central part, the ridges and valleys in the second part extending horizontally and connect with respective ridges and valleys in the central part, the ridges in the first part being horizontally level with the valleys in the second part and vice versa.

The above heat exchanger plate according to the second aspect is preferably used in a plate heat exchanger according to the first aspect.

The above objects are realised in a third aspect by a method of manufacturing a plate heat exchanger for treatment of a liquid feed, the method comprising
providing a plurality of heat exchanger plate defining a first vertical edge, an opposite second vertical edge extending parallel to the first vertical edge and a central vertical axis extending substantially centrally between and in parallel with the first vertical edge and the second vertical edge, each heat exchanger plate further defining an evaporation section for vaporizing the feed, a condensation section for condensing the vaporized feed, and a separation section for separating vaporized feed and non-vaporized feed, the separation section being located between the evaporation section and the condensation section along the direction of the central vertical axis and forms alternating ridges and valleys, the separation section defines:
a central part extending on both sides of the central vertical axis, the ridges and valleys in the central part extending at an oblique angle relative to the central vertical axis,
a first part extending between the first vertical edge and the central part, the ridges and valleys in the first part extending horizontally and connect with respective ridges and valleys in the central part, and
a second part extending between the second vertical edge and the central part, the ridges and valleys in the second part extending horizontally and connect with respective ridges and valleys in the central part, the ridges in the first part being horizontally level with the valleys in the second part and vice versa, and
arranging the heat exchanger plates successively in a plate package forming the heat exchanger, whereby every second plate is turned about the central axis such that ridges fall into valleys of opposing plates in the first and second parts and opposing ridges of opposing plates contact each other in the central part.

The above method according to the third aspect is preferably used together with heat exchanger plates according to the second aspect to manufacture a plate heat exchanger according to the first aspect.

The evaporation section is located in the lower part of the plate package, the condensation section is located in the upper part of the plate package and the separation section is located in between the evaporation section and the condensation section.

The above objects are realised in a fourth aspect by a plate heat exchanger for treatment of a liquid feed, the heat exchanger comprising a plate package having a plurality of successively arranged heat exchanger plates, each heat exchanger plate defining a first vertical edge, an opposite second vertical edge extending parallel to the first vertical edge and a central vertical axis extending substantially centrally between and in parallel with the first vertical edge and the second vertical edge, each heat exchanger plate further defining an evaporation section for vaporizing the feed, a condensation section for condensing the vaporized feed, and a separation section for separating vaporized feed and non-vaporized feed, the separation section being located between the evaporation section and the condensation section along the direction of the central vertical axis and forms alternating ridges and valleys, the separation section defines:
a central part extending on both sides of the central vertical axis,
a first part extending between the first vertical edge and the central part, the ridges and valleys in the first part extending horizontally and connect with respective ridges and valleys in the central part,
a second part extending between the second vertical edge and the central part, the ridges and valleys in the second part extending horizontally and connect with respective ridges and valleys in the central part, the ridges in the first part being horizontally level with the valleys in the second part and vice versa,
a first edge part between the first vertical edge and the first part, and
a second edge part between the second vertical edge and the second part, , the ridges and valleys in the first edge part and second edge part extending at an oblique angle relative to the central vertical axis
whereby adjacent heat exchanging plates are arranged such that ridges fall into valleys of opposing plates in the first and second parts and opposing ridges of opposing plates contact each other in the first edge part and second edge part.

The edge parts are located adjacent the gasket groove at the edge of the plate. Typically, the ridges and valleys extend in an oblique angle in the first edge part and second edge part. In this way a cross-corrugated pattern will be achieved adjacent the gasket groove. This will improve the design and the structural stability of the gasket groove since the contact point established thereby will absorb pressure loads which otherwise would have affected the gasket. Further, having contact points adjacent the gasket groove will keep the gasket in place in the groove and substantially prevent the gasket from being mispositioned. The risk of leakage is thereby reduced.

The above objects are realised in a fifth aspect by a heat exchanger plate for a plate heat exchanger for treatment of a liquid feed, heat exchanger plate defining each heat exchanger plate defining a first vertical edge, an opposite second vertical edge extending parallel to the first vertical edge and a central vertical axis extending substantially centrally between and in parallel with the first vertical edge and the second vertical edge, each heat exchanger plate further defining an evaporation section for vaporizing the feed, a condensation section for condensing the vaporized feed, and a separation section for separating vaporized feed and non-vaporized feed, the separation section being located between the evaporation section and the condensation section along the direction of the central vertical axis and forms alternating ridges and valleys, the separation section defines:
a central part extending on both sides of the central vertical axis,
a first part extending between the first vertical edge and the central part, the ridges and valleys in the first part extending horizontally and connect with respective ridges and valleys in the central part,
a second part extending between the second vertical edge and the central part, the ridges and valleys in the second part extending horizontally and connect with respective ridges and valleys in the central part, the ridges in the first part being horizontally level with the valleys in the second part and vice versa,
a first edge part between the first vertical edge and the first part, and
a second edge part between the second vertical edge and the second part, the ridges and valleys in the first edge part and second edge part extending at an oblique angle relative to the central vertical axis.

The above objects are realised in a sixth aspect by a method of manufacturing a plate heat exchanger for treatment of a liquid feed, the method comprising
providing a plurality of heat exchanger plate defining a first vertical edge, an opposite second vertical edge extending parallel to the first vertical edge and a central vertical axis extending substantially centrally between and in parallel with the first vertical edge and the second vertical edge, each heat exchanger plate further defining an evaporation section for vaporizing the feed, a condensation section for condensing the vaporized feed, and a separation section for separating vaporized feed and non-vaporized feed, the separation section being located between the evaporation section and the condensation section along the direction of the central vertical axis and forms alternating ridges and valleys, the separation section defines:
a central part extending on both sides of the central vertical axis,
a first part extending between the first vertical edge and the central part, the ridges and valleys in the first part extending horizontally and connect with respective ridges and valleys in the central part,
a second part extending between the second vertical edge and the central part, the ridges and valleys in the second part extending horizontally and connect with respective ridges and valleys in the central part, the ridges in the first part being horizontally level with the valleys in the second part and vice versa,
a first edge part between the first vertical edge and the first part, and
a second edge part between the second vertical edge and the second part, the ridges and valleys in the first edge part and second edge part extending at an oblique angle relative to the central vertical axis, and
arranging the heat exchanger plates successively in a plate package forming the heat exchanger, whereby every second plate is turned about the central axis such that ridges fall into valleys of opposing plates in the first and second parts and opposing ridges of opposing plates contact each other in the first and second edge part.

The cross corrugated shape of the first- and second edge parts may also be applied without cross corrugated shape at the centre, according to the fourth, fifth and sixth aspect. This improves the structural stability at the gasket and gasket groove at the edge of the plate. Using the larger press depth in the first and second parts of the separation section requires a height adjustment of the press depth in the first and second edge parts such that the press depth corresponds to the press depth of the evaporation second and condensation section.

### Brief description of the drawings

Fig. 1 discloses a side view of a plate heat exchanger
Fig. 2 discloses a front view of a prior art heat exchanging plate
Fig. 3 discloses how the horizontally oriented ridges and valleys fall into each other
Fig. 4 discloses a front view of a heat exchanging plate
Fig. 5 discloses view of the rear side of a heat exchanger plate
Fig. 6 discloses the separation section of a heat exchange plate
Fig. 7 discloses two opposite plates of which one has been turned 180 degrees

### Detailed description of the drawings

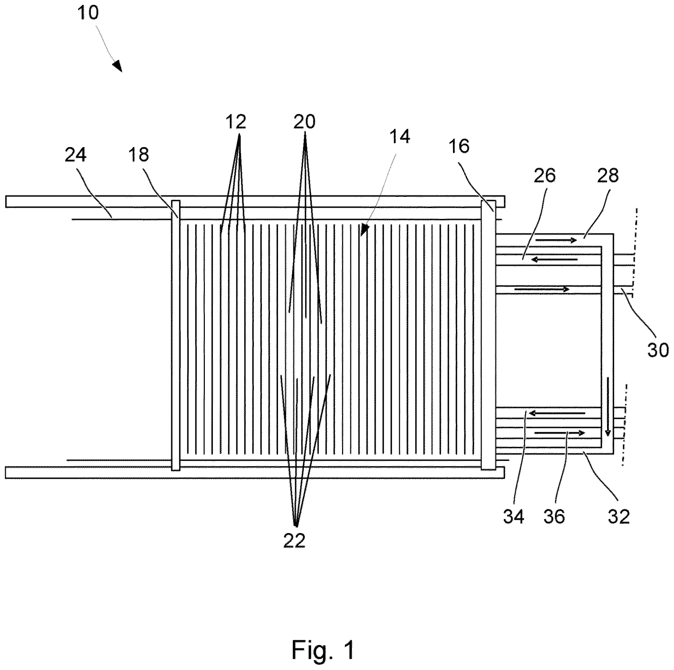

Fig. 1 discloses a side view of a plate heat exchanger 10 of the invention. In the following description an application with respect to desalination of seawater is described, i.e. the feed is sea water. However, it is to be noted that the invention is not limited to the feed being sea water but may also refer to any other treatment, for instance distillation of a liquid. The plate heat exchanger comprises a large number of compression moulded heat exchanger plates 12, which are provided in parallel to each other and successively in such a way that they form a plate package 14. The plate package 14 is provided between a frame plate 16 and a pressure plate 18.

Between the heat exchanger plates 12, first plate interspaces 20 and second plate interspaces 22 are formed. The first plate interspaces 20 and the second plate interspaces 22 are provided in an alternating order in the plate package 14 in such a way that substantially each first plate interspace 20 is neighbouring two second plate interspaces 22, and substantially each second plate interspace 22 is neighbouring two first plate interspaces 20. Different sections in the plate package 14 are delimited from each other by means of gaskets (not shown) in each plate interspace whereby the first plate interspace 20 includes a first type gasket (not shown) and the second plate interspace 22 includes a second type gasket (not shown). The plate package 14, i.e. the heat exchanger plates 12 and the gaskets (not shown) provided therebetween, is kept together by means of schematically indicated tightening bolts 24 in a manner known per se.

The plate package 14 is connected to a cooling water inlet conduit 26, a cooling water outlet conduit 28 and a fresh water outlet conduit 30. The cooling water is typically sea water and thus the cooling water outlet conduit 28 is connected to a sea water inlet conduit 32 in order to recover the heat absorbed by the cooling water. The plate package 12 is further connected to a heating fluid inlet conduit 34 and a heating fluid outlet conduit 36. The heating fluid is used for vaporizing the feed, i.e. the sea water which is entering the plate package 14 through the sea water inlet conduit 32. The heating fluid may be heated water, such as jacket water from a ship's engine. The condensed fresh water is leaving the plate package 14 through the fresh water outlet conduit 30.

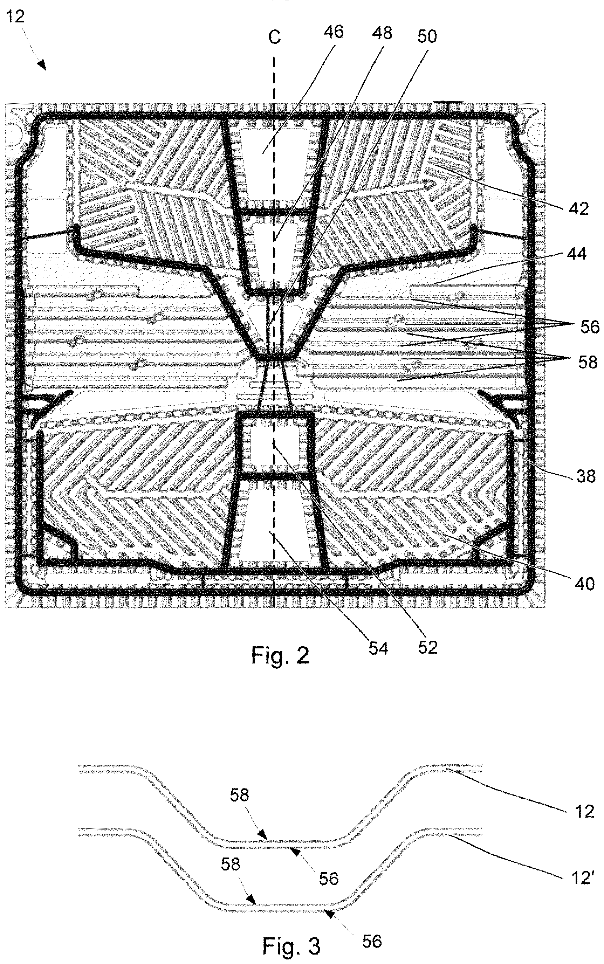

Fig. 2 discloses a front view of a prior art heat exchanging plate 12 having an evaporation section 40, a separation section 44 and a condensation section 42. The plate 12 also defines centrally located ports 46 48 50 52 54 along the centre axis C, The ports 46 48 constituting cooling fluid outlet and inlet ports, the port 50 constituting a fresh water outlet port and the ports 52 54 constituting heating fluid inlet and outlet ports. The separation section defines transversally oriented ridges 56 and valleys 58. The plate also defines a gasket 38 in a gasket groove.

Fig. 3 discloses how the horizontally oriented ridges 56 and valleys 58 fall into each other in two adjacent plates 12 12'. It is also illustrated how the press depth of the ridges and valleys is increased in the separation section. The ridges 56 and valleys 58 define a press depth such that the lowest part of the upper plate 12 is lower than the highest part of the adjacent plate 12'. In this way the flow path from the evaporation section to the condensation section will be increased and the changes of direction of the flow over the corrugations will be increased, which will improve the separation of liquids from the vaporized feed, however, the press depth of the ridges 56 and valleys 58 must be reduced in locations where the ridges 56 and valleys 58 should contact the neighbouring plate..

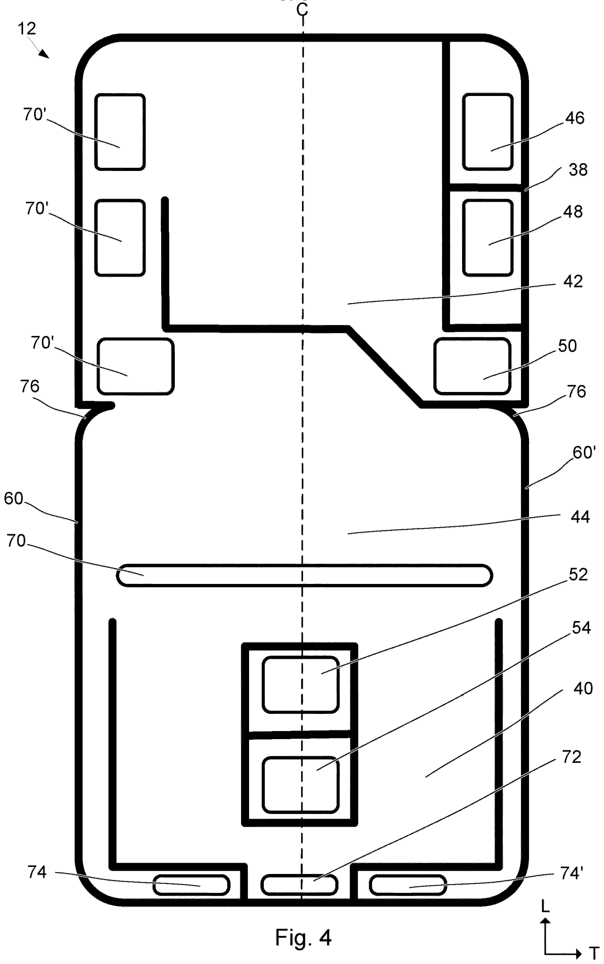

Fig. 4 discloses a front view of a heat exchanging plate 12 according to the present invention. Each heat exchanger plate 12 has a first vertical edge 60, an opposite second vertical edge 60' substantially parallel with the first vertical edge 60 and a centre axis C extending in the vertical direction substantially centrally between the vertical edges 60, 60'. The centre axis C extending substantially vertically when the plate package is located in a normal position of use.

The heat exchanger plate comprises an evaporation section 40 at the bottom for evaporating the feed, i.e. the sea water, a condensation section 42 at the top for condensing the evaporated feed and a separation section 44 located in between the evaporation section 40 and the condensation section 42 for separating evaporated feed and non-evaporated feed. Vaporized feed is allowed to flow from the evaporation section 40 via the separation section 44 to the condensation section 42.

The evaporation section 40 and the condensation section 42 are corrugated defining valleys and ridges having oblique angles forming a cross corrugated pattern together with the opposing plate in order to increase the heat transfer through the heat exchanger plate 12. A first plate interspace is formed by arranging two plates 12 face-to-face having a gasket 38 of a first type located in-between the heat exchanger plates. The two plates forming the plate interspace are identical, however, one of the heat exchanger plates is turned 180 degrees about the centre axis C. In this way the corrugation of the heat exchanger plates may be arranged such that opposing ridges form a cross shaped pattern and contact each other at contact points in the evaporation section 40 and the condensation section 42.

The heat exchanger plate 12 defines one or more apertures 70 located between the evaporation section 40 and the separation section 44 for allowing some vaporized feed from the evaporation section 40 to pass to the opposite plate interspace which includes a parallel separation section. Further, three upper vapor ports 70' are located between the separation section 44 and the condensation section 42 adjacent the first vertical edge 60 for allowing vaporized feed to pass through the heat exchanger plate 12 to the condensation section 42.

Located adjacent the second edge 60' is a cooling water outlet port 46, a cooling water inlet port 48 and a fresh water outlet port 50. The cooling water inlet port 46 is communicating with the cooling water inlet conduit, the cooling water outlet port 48 is communicating with the cooling water outlet conduit and the fresh water outlet port 50, which collects the condensed feed from the condensation section 42, is communicating with the fresh water outlet conduit.

Centrally located adjacent the evaporation section 40 is a heating fluid inlet port 52 and a heating fluid outlet port 54 is provided. The heating fluid inlet port 52 is communicating with the heating fluid inlet conduit and the heating fluid outlet port 54 is communicating with the heating fluid outlet conduit. Additionally, a feed inlet port 72 connected to the sea water inlet conduit for supplying sea water to the evaporation section 40 is centrally located adjacent the bottom and two outlet ports 74 74' for collecting the non-evaporated feed flowing down from the separation section 44 are located on opposite sides of but separated from feed inlet port 72 at the bottom of the plate 12.

At the upper part of the separation section 44 flow guiding elements 76 may be provided. The flow guiding element 76 directs the vapor flow into the separation section and prevents the flow from taking the direct route through the separation section 44 into the condensation section 42, reducing the risk of carryover of non-evaporated feed.

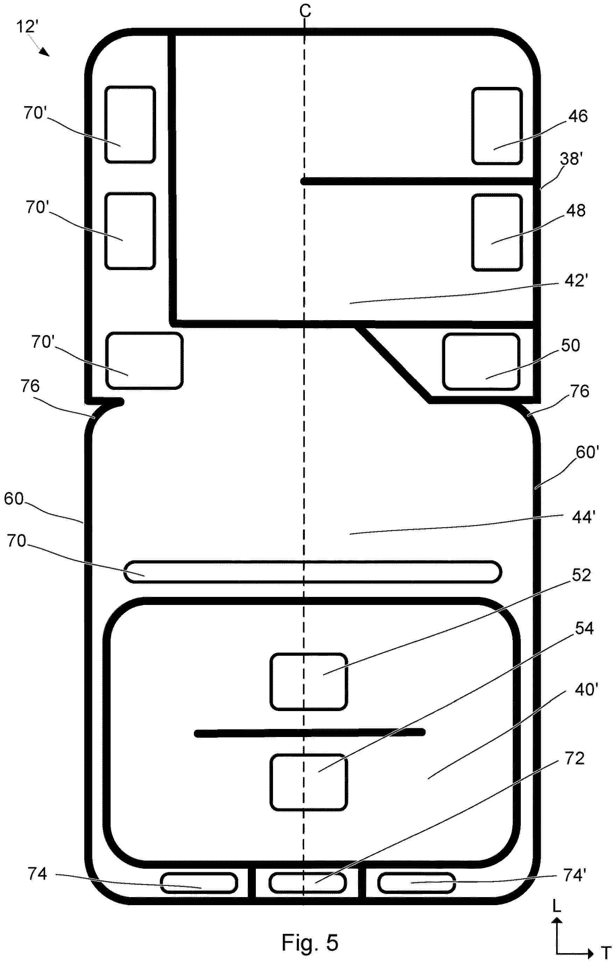

Fig. 5 discloses view of the rear side of a heat exchanger plate 12' and a second type gasket 38' of a plate heat exchanger according to the present invention. The heat exchanger plate 12' is thus the same as the heat exchanger plate 12 except that it has been turned 180 degrees about the centre axis 46. It defines a heating section 40' opposite the evaporation section and a cooling section 42' opposite the condensation section. The cooling water inlet port 46 and the cooling water outlet port 48 communicate with the cooling section 42' whereas the heating fluid inlet port 52 and the heating fluid outlet port 54 communicate with the heating section 40'. The cooling section 42' and the heating section 40' are sealed off relative to the other ports, respectively. The cooling section 42' is arranged to cool the opposite condensing section and the heating section 40' is arranged to heat the opposite evaporation section. The rear side forms a second plate interspace.

The rear side of a heat exchanger plate 12' also includes a separation section 44' between the heating section 40' and the cooling section 42'. Vaporized feed is introduced via the lower vapor aperture 70 from the first plate interspace. The separation section 44' functions identically to the one on the opposite side and separates evaporated feed and non-evaporated feed. The evaporated feed flows up through the upper vapor apertures 70' whereas the non-evaporated feed flows down to the outlets 74 74".

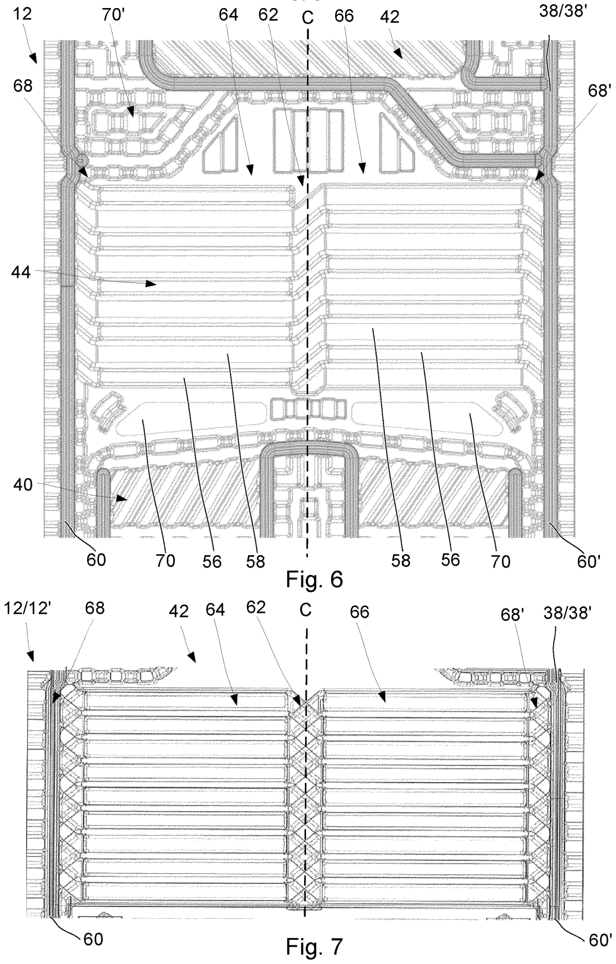

Fig. 6 discloses the separation section 44 of a heat exchange plate 12 according to the present invention. The plate 12 comprises parallel ridges 56 and valleys 58. The plate 12 defines a first vertical edge 60 and a second vertical edge 60'. The first vertical edge 60 and a second vertical edge 60' having a gasket for sealing against an opposite plate (not shown). The plate 12 further defines a centre axis in-between the first- and second vertical edges 60 60'. The separation section 44 defines a central part 62 at the centre axis C, a first part 64 between the first vertical edge 60 and the centre part 62 and a second part 66 between the second vertical edge 60' and the centre part 62.

In the first- and second parts 64 66 the corrugations extend transversally. The ridges 56 in the first part 64 are horizontally level with the respective valleys 58 in the second part 66, and vice versa. In this way, when plates are positioned face-to-face in the plate package, wherein every second plate is turned 180 degrees about the centre axis, the ridges 56 in the first part 64 will fall into valleys 58 in the second part 66 and vice versa. The plate interspaces in the first- and second part 64 66 will thus form a meandering flow path in the vertical direction.

In the central part 62, the corrugations define an oblique angle relative to the central axis C. Preferably, the angle is about 45 degrees. In this way, when the plates are positioned face-to-face in the plate package, the ridges 56 and valleys 58 of opposing plates will form a cross-corrugated pattern. In this way the ridges 56 and valleys 58 of the first- and second parts 64 66 are interconnected in the central part 62. Opposing ridges 56 of opposing plates will contact at contact points, and valleys 58 will form ridges in the neighbouring plate interspace and also contact opposing ridged in the neighbouring plate interspace, which will improve the structural stability of the plate package in the separation section 42. The width of the central part 62 is significantly smaller than the width of the respective first- and second parts 64 66 as the effective separation takes place in the first- and seconds parts 62.

The separation section 44 also comprises apertures 70 at the bottom. This is to allow vaporized feed to enter both sides of the plate as both plate interspaces may be used for separation. Vaporized feed may re-enter the plate interspace having the condensation section (not shown here) via apertures 70' at the top of the separation section 44. The condensation section may also in an alternative embodiment be located in the opposite plate interspace relative to the evaporation section.

Between the first vertical edge 60 and the first part 64, and, between the second vertical edge 60' and the second part 66, respectively, there are located respective edge parts 68 68'. In the edge parts 68 68', the corrugations define an oblique angle relative to the central axis C, similar to the central part 62. Preferably, the angle is about 45 degrees. In this way, when the plates are positioned face-to-face in the plate package, the ridges 56 and valleys 58 of opposing plates will form a cross-corrugated pattern. Opposing ridges 56 of opposing plates will contact at contact points, and valleys 58 will form ridges in the neighbouring plate interspace and also contact opposing ridged in the neighbouring plate interspace, which will improve the structural stability of the plate package at the gasket located at the first and second vertical edges 60 60', respectively. The width of the edge parts 68 68' are similar to the width of the central part 62 as the effective separation takes place in the first- and seconds parts 64 66.

Fig. 7 discloses two opposite plates 38 38' of which one has been turned 180 degrees about the centre axis and positioned face-to-face in the plate package. In the first and second parts 64 66, the corrugations fall into each other without contact, whereas in the central part 62 and in the edge parts 68 68', the corrugations define a cross-corrugated pattern.

### Reference numerals

10. plate heat exchanger
12. heat exchanger plates
14. plate package
16. frame plate
18. pressure plate
20. first plate interspaces
22. second plate interspaces
24. tightening bolts
26. cooling water inlet conduit
28. cooling water outlet conduit
30. fresh water outlet conduit
32. sea water inlet conduit
34. heating fluid inlet conduit
36. heating fluid outlet conduit
38. gasket
40. evaporation section
42. condensation section
44. separation section
46. cooling fluid outlet
48. cooling fluid inlet
50. fresh water outlet
52. heating fluid inlet
54. heating fluid outlet
56. ridge
58. valley
60. vertical edges
62. central part
64. first part
66. second part
68. edge parts
70. apertures
72. feed inlet
74. brine outlet
76. flow guide
C. centre vertical axis
A (') denotes a similar features in a different embodiment.

## Claims

1. A heat exchanger plate (12) for a plate heat exchanger (10) for treatment of a liquid feed, the heat exchanger plate (12) defining a first vertical edge (60), an opposite second vertical edge (60') extending parallel to the first vertical edge (60) and a central vertical axis (C) extending substantially centrally between and in parallel with the first vertical edge (60) and the second vertical edge (60'), each heat exchanger plate (12) further defining an evaporation section (40) for vaporizing the feed, a condensation section (42) for condensing the vaporized feed, and a separation section (44) for separating vaporized feed and non-vaporized feed, the separation section (44) being located between the evaporation section (40) and the condensation section (42) along the direction of the central vertical axis and forms alternating ridges (56) and valleys (58), the separation section (44) defines:
a central part (62) extending on both sides of the central vertical axis (C), the ridges (56) and valleys (58) in the central part (62) extending at an oblique angle relative to the central vertical axis (C),
a first part (64) extending between the first vertical edge (60) and the central part (62), the ridges (56) and valleys (58) in the first part (64) extending horizontally and connect with respective ridges (56) and valleys (58) in the central part (62), and
a second part (66) extending between the second vertical edge (60') and the central part (62), the ridges (56) and valleys (58) in the second part (66) extending horizontally and connect with respective ridges (56) and valleys (58) in the central part (62), the ridges (56) in the first part (64) being horizontally level with the valleys (58) in the second part (66) and vice versa,
**characterized in that** there is a transition at the central vertical axis (C), where ridges (56) and valleys (58) meet.

2. The heat exchanger plate according to claim 1, wherein the ridges (56) and valleys (58) in the first and second parts (64, 66) define a first press depth, whereas the ridges (56) and valleys (58) in the central part (62) and/or in the first and second edge parts define a second press depth, the first press depth being larger than the second press depth.

3. The heat exchanger plate according to any of the preceding claims, wherein the width of the central part (62) is smaller than the width of each of the first and second parts (64, 66).

4. The heat exchanger plate according to any of the preceding claims, wherein the central part (62) defines an area less than 20% of the area of each of the first and second parts (64, 66), preferably less than 10%, more preferably less than 5%.

5. The heat exchanger plate according to any of the preceding claims, wherein the width of the central part (62) is substantially equal to the distance between the centre of adjacent ridges (56) in the first and second parts (64, 66).

6. A plate heat exchanger (10) for treatment of a liquid feed, the heat exchanger (10) comprising a plate package (14) having a plurality of successively arranged heat exchanger plates (12), each heat exchanger plate (12) being according to any of the claims 1-5,
whereby adjacent heat exchanger plates (12) are arranged such that ridges (56) fall into valleys (58) of opposing plates (12) in the first and second parts (64, 66) and opposing ridges (56) of opposing plates (12) contact each other in the central part (62).

7. The plate heat exchanger according to claim 6, wherein the separation section (44) of each heat exchanger plate (12) defines a first edge part between the first vertical edge (60) and the first part (64) and a second edge part between the second vertical edge (60') and the second part (66), the ridges (56) and valleys (58) in the first and second edge parts extend at an oblique angle relative to the central vertical axis (C) such that opposing ridges (56) of opposing plates (12) contact each other in the first and second edge parts (64, 66).

8. The plate heat exchanger according to any of the claims 6-7, wherein the plate package (14) defining first plate interspaces and second plate interspaces arranged in alternating order, each plate interspace being enclosed by a gasket (38) extending along the first and second vertical edges (60, 60') of each plate (12).

9. The plate heat exchanger according to claim 8, wherein the separation section (44) is provided in both the first and second plate interspaces (20, 22).

10. The plate heat exchanger according to claim 9, wherein the heat exchanging plate (12) is provided with apertures (70, 70') at the first and second passages for communication between the plate interspaces (20, 22).

11. A method of manufacturing a plate heat exchanger (10) for treatment of a liquid feed, the method comprising
providing a plurality of heat exchanger plates (12) defining a first vertical edge (60), an opposite second vertical edge (60') extending parallel to the first vertical edge (60) and a central vertical axis (C) extending substantially centrally between and in parallel with the first vertical edge (60) and the second vertical edge (60'), each heat exchanger plate (12) further defining an evaporation section (40) for vaporizing the feed, a condensation section (42) for condensing the vaporized feed, and a separation section (44) for separating vaporized feed and non-vaporized feed, the separation section (44) being located between the evaporation section (40) and the condensation section (42) along the direction of the central vertical axis and forms alternating ridges (56) and valleys (58), the separation section (44) defines:
a central part (62) extending on both sides of the central vertical axis, the ridges (56) and valleys (58) in the central part (62) extending at an oblique angle relative to the central vertical axis (C),
a first part (64) extending between the first vertical edge (60) and the central part (62), the ridges (56) and valleys (58) in the first part (64) extending horizontally and connect with respective ridges (56) and valleys (58) in the central part (62), and
a second part (66) extending between the second vertical edge (60') and the central part (62), the ridges (56) and valleys (58) in the second part (66) extending horizontally and connect with respective ridges (56) and valleys (58) in the central part (62), the ridges (56) in the first part (64) being horizontally level with the valleys (58) in the second part (66) and vice versa, and
arranging the heat exchanger plates (12) successively in a plate package (14) forming the heat exchanger, whereby every second plate is turned about the central axis (C) such that ridges (56) fall into valleys (58) of opposing plates (12) in the first and second parts (64, 66) and opposing ridges (56) of opposing plates (12) contact each other in the central part (62),
**characterized in that** there is a transition at the central vertical axis (C), where ridges (56) and valleys (58) meet.

12. Use of the plate heat exchanger (10) according to any of the claims 6-10, wherein the liquid feed is sea water.

## Patentansprüche

1. Wärmetauscherplatte (12) für einen Plattenwärmetauscher (10) zur Behandlung einer Flüssigkeitszufuhr, wobei die Wärmetauscherplatte (12) eine erste vertikale Kante (60), eine entgegengesetzte zweite vertikale Kante (60'), die sich parallel zu der ersten vertikalen Kante (60) erstreckt, und eine zentrale vertikale Achse (C), die sich im Wesentlichen zentral zwischen und parallel zu der ersten vertikalen Kante (60) und der zweiten vertikalen Kante (60') erstreckt, definiert, wobei jede Wärmetauscherplatte (12) ferner eine Verdampfungssektion (40) zum Verdampfen der Zufuhr, eine Kondensationssektion (42) zum Kondensieren der verdampften Zufuhr und eine Trennungssektion (44) zum Trennen von verdampfter Zufuhr und nicht-verdampfter Zufuhr definiert, wobei sich die Trennungssektion (44) zwischen der Verdampfungssektion (40) und der Kondensationssektion (42) entlang der Richtung der zentralen vertikalen Achse befindet und abwechselnde Stege (56) und Täler (58) bildet, wobei die Trennungssektion (44) Folgendes definiert:
einen zentralen Teil (62), der sich auf beiden Seiten der zentralen vertikalen Achse (C) erstreckt, wobei sich die Stege (56) und Täler (58) in dem zentralen Teil (62) in einem schiefen Winkel im Verhältnis zu der zentralen vertikalen Achse (C) erstrecken,
einen ersten Teil (64), der sich zwischen der ersten vertikalen Kante (60) und dem zentralen Teil (62) erstreckt, wobei sich die Stege (56) und Täler (58) in dem ersten Teil (64) horizontal erstrecken und sich mit jeweiligen Stegen (56) und Tälern (58) in dem zentralen Teil (62) verbinden, und
einen zweiten Teil (66), der sich zwischen der zweiten vertikalen Kante (60') und dem zentralen Teil (62) erstreckt, wobei sich die Stege (56) und Täler (58) in dem zweiten Teil (66) horizontal erstrecken und sich mit jeweiligen Stegen (56) und Tälern (58) in dem zentralen Teil (62) verbinden, wobei die Stege (56) in dem ersten Teil (64) horizontal bündig mit den Tälern (58) in dem zweiten Teil (66) sind und umgekehrt,
**dadurch gekennzeichnet, dass** es einen Übergang an der zentralen vertikalen Achse (C) gibt, wo sich Stege (56) und Täler (58) treffen.

2. Wärmetauscherplatte nach Anspruch 1, wobei die Stege (56) und Täler (58) in dem ersten und dem zweiten Teil (64, 66) eine erste Presstiefe definieren, wohingegen die Stege (56) und Täler (58) in dem zentralen Teil (62) und/oder in dem ersten und dem zweiten Kantenteil eine zweite Presstiefe definieren, wobei die erste Presstiefe größer ist als die zweite Presstiefe.

3. Wärmetauscherplatte nach einem der vorhergehenden Ansprüche, wobei die Breite des zentralen Teils (62) kleiner ist als die Breite von jedem des ersten und des zweiten Teils (64, 66).

4. Wärmetauscherplatte nach einem der vorhergehenden Ansprüche, wobei der zentrale Teil (62) eine Fläche von weniger als 20 % der Fläche von jedem des ersten und des zweiten Teils (64, 66), vorzugsweise von weniger als 10 %, noch bevorzugter von weniger als 5 %, definiert.

5. Wärmetauscherplatte nach einem der vorhergehenden Ansprüche, wobei die Breite des zentralen Teils (62) im Wesentlichen gleich dem Abstand zwischen der Mitte von benachbarten Stegen (56) in dem ersten und dem zweiten Teil (64, 66) ist.

6. Plattenwärmetauscher (10) zur Behandlung einer Flüssigkeitszufuhr, wobei der Wärmetauscher (10) ein Plattenpaket (14) umfasst, das eine Vielzahl von aufeinanderfolgend angeordneten Wärmetauscherplatten (12) aufweist, wobei jede Wärmetauscherplatte (12) nach einem der Ansprüche 1 bis 5 ist,
wodurch benachbarte Wärmetauscherplatten (12) derart angeordnet sind, dass Stege (56) in Täler (58) gegenüberliegender Platten (12) in dem ersten und dem zweiten Teil (64, 66) fallen und gegenüberliegende Stege (56) gegenüberliegender Platten (12) einander in dem zentralen Teil (62) berühren.

7. Plattenwärmetauscher nach Anspruch 6, wobei die Trennungssektion (44) jeder Wärmetauscherplatte (12) einen ersten Kantenteil zwischen der ersten vertikalen Kante (60) und dem ersten Teil (64) und einen zweiten Kantenteil zwischen der zweiten vertikalen Kante (60') und dem zweiten Teil (66) definiert, wobei sich die Stege (56) und Täler (58) in dem ersten und dem zweiten Kantenteil derart in einem schiefen Winkel im Verhältnis zu der zentralen vertikalen Achse (C) erstrecken, dass gegenüberliegende Stege (56) gegenüberliegender Platten (12) einander in dem ersten und dem zweiten Kantenteil (64, 66) berühren.

8. Plattenwärmetauscher nach einem der Ansprüche 6 bis 7, wobei das Plattenpaket (14) erste Plattenzwischenräume und zweite Plattenzwischenräume definiert, die in abwechselnder Reihenfolge angeordnet sind, wobei jeder Plattenzwischenraum durch eine Dichtung (38) umschlossen wird, die sich entlang der ersten und der zweiten vertikalen Kante (60, 60') jeder Platte (12) erstreckt.

9. Plattenwärmetauscher nach Anspruch 8, wobei die Trennungssektion (44) in sowohl den ersten als auch den zweiten Plattenzwischenräumen (20, 22) bereitgestellt ist.

10. Plattenwärmetauscher nach Anspruch 9, wobei die Wärmetauscherplatte (12) mit Öffnungen (70, 70') an den ersten und den zweiten Durchgängen für eine Verbindung zwischen den Plattenzwischenräumen (20, 22) versehen ist.

11. Verfahren zum Herstellen eines Plattenwärmetauschers (10) zur Behandlung einer Flüssigkeitszufuhr, wobei das Verfahren Folgendes umfasst:
Bereitstellen einer Vielzahl von Wärmetauscherplatten (12), die eine erste vertikale Kante (60), eine entgegengesetzte zweite vertikale Kante (60'), die sich parallel zu der ersten vertikalen Kante (60) erstreckt, und eine zentrale vertikale Achse (C), die sich im Wesentlichen zentral zwischen und parallel zu der ersten vertikalen Kante (60) und der zweiten vertikalen Kante (60') erstreckt, definiert, wobei jede Wärmetauscherplatte (12) ferner eine Verdampfungssektion (40) zum Verdampfen der Zufuhr, eine Kondensationssektion (42) zum Kondensieren der verdampften Zufuhr und eine Trennungssektion (44) zum Trennen von verdampfter Zufuhr und nicht-verdampfter Zufuhr definiert, wobei sich die Trennungssektion (44) zwischen der Verdampfungssektion (40) und der Kondensationssektion (42) entlang der Richtung der zentralen vertikalen Achse befindet und abwechselnde Stege (56) und Täler (58) bildet, wobei die Trennungssektion (44) Folgendes definiert:
einen zentralen Teil (62), der sich auf beiden Seiten der zentralen vertikalen Achse (C) erstreckt, wobei sich die Stege (56) und Täler (58) in dem zentralen Teil (62) in einem schiefen Winkel im Verhältnis zu der zentralen vertikalen Achse (C) erstrecken,
einen ersten Teil (64), der sich zwischen der ersten vertikalen Kante (60) und dem zentralen Teil (62) erstreckt, wobei sich die Stege (56) und Täler (58) in dem ersten Teil (64) horizontal erstrecken und sich mit jeweiligen Stegen (56) und Tälern (58) in dem zentralen Teil (62) verbinden, und
einen zweiten Teil (66), der sich zwischen der zweiten vertikalen Kante (60') und dem zentralen Teil (62) erstreckt, wobei sich die Stege (56) und Täler (58) in dem zweiten Teil (66) horizontal erstrecken und sich mit jeweiligen Stegen (56) und Tälern (58) in dem zentralen Teil (62) verbinden, wobei die Stege (56) in dem ersten Teil (64) horizontal bündig mit den Tälern (58) in dem zweiten Teil (66) sind und umgekehrt, und
Anordnen der Wärmetauscherplatten (12) aufeinanderfolgend in einem Plattenpaket (14), das den Wärmetauscher bildet, wodurch jede zweite Platte derart um die zentrale Achse (C) gedreht wird, dass Stege (56) in Täler (58) gegenüberliegender Platten (12) in dem ersten und dem zweiten Teil (64, 66) fallen und gegenüberliegende Stege (56) gegenüberliegender Platten (12) einander in dem zentralen Teil (62) berühren,
**dadurch gekennzeichnet, dass** es einen Übergang an der zentralen vertikalen Achse (C) gibt, wo sich Stege (56) und Täler (58) treffen.

12. Verwendung des Plattenwärmetauschers (10) nach einem der Ansprüche 6 bis 10, wobei die Flüssigkeitszufuhr Meerwasser ist.

## Revendications

1. Plaque d'échangeur de chaleur (12) pour un échangeur de chaleur à plaques (10) pour le traitement d'une alimentation liquide, la plaque d'échangeur de chaleur (12) définissant un premier bord vertical (60), un deuxième bord vertical opposé (60') s'étendant parallèlement au premier bord vertical (60), et un axe central vertical (C) s'étendant sensiblement de manière centrale entre et parallèlement au premier bord vertical (60) et au deuxième bord vertical (60'), chaque plaque d'échangeur de chaleur (12) définissant en outre une section d'évaporation (40) pour vaporiser l'alimentation, une section de condensation (42) pour condenser l'alimentation vaporisée, et une section de séparation (44) pour séparer de l'alimentation vaporisée et de l'alimentation non vaporisée, la section de séparation (44) étant située entre la section d'évaporation (40) et la section de condensation (42) le long de la direction de l'axe central vertical et formant en alternance des crêtes (56) et des creux (58), la section de séparation (44) définissant :
une partie centrale (62) s'étendant sur les deux côtés de l'axe central vertical (C), les crêtes (56) et les creux (58) dans la partie centrale (62) s'étendant à un angle oblique par rapport à l'axe central vertical (C),
une première partie (64) s'étendant entre le premier bord vertical (60) et la partie centrale (62), les crêtes (56) et les creux (58) dans la première partie (64) s'étendant horizontalement et se reliant à des crêtes (56) et des creux (58) respectifs dans la partie centrale (62), et
une deuxième partie (66) s'étendant entre le deuxième bord vertical (60') et la partie centrale (62), les crêtes (56) et les creux (58) dans la deuxième partie (66) s'étendant horizontalement et se reliant à des crêtes (56) et des creux (58) respectifs dans la partie centrale (62), les crêtes (56) dans la première partie (64) étant horizontalement alignées sur les creux (58) dans la deuxième partie (66) et vice-versa,
**caractérisée en ce qu'**il y a une transition au niveau de l'axe central vertical (C), où des crêtes (56) et des creux (58) se rencontrent.

2. Plaque d'échangeur de chaleur selon la revendication 1, dans laquelle les crêtes (56) et les creux (58) dans les première et deuxième parties (64, 66) définissent une première profondeur de pression, tandis que les crêtes (56) et les creux (58) dans la partie centrale (62) et/ou dans les première et deuxième parties de bordure définissent une deuxième profondeur de pression, la première profondeur de pression étant supérieure à la deuxième profondeur de pression.

3. Plaque d'échangeur de chaleur selon l'une quelconque des revendications précédentes, dans laquelle la largeur de la partie centrale (62) est inférieure à la largeur de chacune des première et deuxième parties (64, 66).

4. Plaque d'échangeur de chaleur selon l'une quelconque des revendications précédentes, dans laquelle la partie centrale (62) définit une superficie représentant moins de 20 % de la superficie de chacune des première et deuxième parties (64, 66), de préférence moins de 10 %, plus préférablement moins de 5 %.

5. Plaque d'échangeur de chaleur selon l'une quelconque des revendications précédentes, dans laquelle la largeur de la partie centrale (62) est sensiblement égale à la distance entre le centre de crêtes adjacentes (56) dans les première et deuxième parties (64, 66).

6. Echangeur de chaleur (10) pour le traitement d'une alimentation liquide, l'échangeur de chaleur (10) comprenant un ensemble de plaques (14) comportant une pluralité de plaques d'échangeur de chaleur agencées successivement (12), chaque plaque d'échangeur de chaleur (12) étant conforme à l'une quelconque des revendications 1 à 5,
moyennant quoi des plaques d'échangeur de chaleur adjacentes (12) sont agencées de sorte que des crêtes (56) tombent dans des creux (58) de plaques opposées (12) dans les première et deuxième parties (64, 66), et que des crêtes opposées (56) de plaques opposées (12) se contactent les unes les autres dans la partie centrale (62).

7. Echangeur de chaleur à plaques selon la revendication 6, dans lequel la section de séparation (44) de chaque plaque d'échangeur de chaleur (12) définit une première partie de bordure entre le premier bord vertical (60) et la première partie (64), et une deuxième partie de bordure entre le deuxième bord vertical (60') et la deuxième partie (66), les crêtes (56) et les creux (58) dans les première et deuxième parties de bordure s'étendant à un angle oblique par rapport à l'axe central vertical (C) de sorte que des crêtes opposées (56) de plaques opposées (12) se contactent les unes les autres dans les première et deuxième parties de bordure (64, 66).

8. Echangeur de chaleur à plaques selon l'une quelconque des revendications 6 à 7, dans lequel l'ensemble de plaques (14) définit des premiers espaces intermédiaires entre des plaques et des deuxièmes espaces intermédiaires entre des plaques agencés dans un ordre alterné, chaque espace intermédiaire entre des plaques étant renfermé par un joint (38) s'étendant le long des premier et deuxième bords verticaux (60, 60') de chaque plaque (12).

9. Echangeur de chaleur à plaques selon la revendication 8, dans lequel la section de séparation (44) est fournie à la fois dans les premiers et deuxièmes espaces intermédiaires entre des plaques (20, 22).

10. Echangeur de chaleur à plaques selon la revendication 9, dans lequel la plaque d'échangeur de chaleur (12) est dotée d'ouvertures (70, 70') au niveau des premier et deuxième passages pour une communication entre les espaces intermédiaires entre des plaques (20, 22).

11. Procédé de fabrication d'un échangeur de chaleur à plaques (10) pour le traitement d'une alimentation liquide, le procédé comprenant :
la fourniture d'une pluralité de plaques d'échangeur de chaleur (12) définissant un premier bord vertical (60), un deuxième bord vertical opposé (60') s'étendant parallèlement au premier bord vertical (60) et un axe central vertical (C) s'étendent sensiblement de manière centrale entre et parallèlement au premier bord vertical (60 et au deuxième bord vertical (60'), chaque plaque d'échangeur de chaleur (12) définissant en outre une section d'évaporation (40) pour vaporiser l'alimentation, une section de condensation (42) pour condenser l'alimentation vaporisée, et une section de séparation (44) pour séparer de l'alimentation vaporisée et de l'alimentation non vaporisée, la section de séparation (44) étant située entre la section d'évaporation (40) et la section de condensation (42) le long de la direction de l'axe vertical central et formant en alternance des crêtes (56) et des creux (58), la section de séparation (44) définissant :
une partie centrale (62) s'étendant sur les deux côtés de l'axe central vertical (C), les crêtes (56) et les creux (58) dans la partie centrale (62) s'étendant à un angle oblique par rapport à l'axe central vertical (C),
une première partie (64) s'étendant entre le premier bord vertical (60) et la partie centrale (62), les crêtes (56) et les creux (58) dans la première partie (64) s'étendant horizontalement et se reliant à des crêtes (56) et des creux (58) respectifs dans la partie centrale (62), et
une deuxième partie (66) s'étendant entre le deuxième bord vertical (60') et la partie centrale (62), les crêtes (56) et les creux (58) dans la deuxième partie (66) s'étendant horizontalement et se reliant à des crêtes (56) et des creux (58) respectifs dans la partie centrale (62), les crêtes (56) dans la première partie (64) étant horizontalement alignées sur les creux (58) dans la deuxième partie (66) et vice-versa, et
l'agencement des plaques d'échangeur de chaleur (12) de manière successive dans un ensemble de plaques (14) formant l'échangeur de chaleur, moyennant quoi chaque deuxième plaque est tournée autour de l'axe central (C), de sorte que des crêtes (56) tombent dans des creux (58) de plaques opposées (12) dans les première et deuxième parties (64, 66) et des crêtes opposées (56) de plaques opposées (12) se contactent les unes les autres dans la partie centrale (62),
**caractérisé en ce qu'**il y a une transition au niveau de l'axe central vertical (C), où des crêtes (56) et des creux (58) se rencontrent.

12. Utilisation de l'échangeur de chaleur à plaques (10) selon l'une quelconque des revendications 6 à 10, dans laquelle l'alimentation liquide est de l'eau de mer.
